# EUROPÄISCHE PATENTSCHRIFT

(11) **EP 3 228 179 B1**
(45) Veröffentlichungstag und Bekanntmachung des Hinweises auf die Patenterteilung: **21.08.2019**
(21) Anmeldenummer: 17163882.8
(22) Anmeldetag: 30.03.2017
(51) Int. Cl.: A01F 15/07, A01F 21/00, B65B 11/04

(54) **BALLENWICKELEINRICHTUNG MIT NOTSTOPPEINRICHTUNG**
BALE WRAPPING DEVICE WITH EMERGENCY STOP DEVICE
ENRUBANNEUSE AVEC DISPOSITIF D'ARRÊT D'URGENCE

(30) Priorität: 04.04.2016 DE 102016205527
(43) Veröffentlichungstag der Anmeldung: 11.10.2017
(73) Patentinhaber: Deere & Company, Moline, IL 61265 (US)
(72) Erfinder: CHAPON, Emmanuel, 70100 Velet (FR); GUIET, Lionel, 70100 Gray (FR); GUERIN, Sebastien, 25000 Besançon (FR)
(74) Vertreter: Reichert, Christian

(56) Entgegenhaltungen:
- EP-A1- 2 106 688
- EP-A1- 2 123 145
- WO-A1-99/64297

## Beschreibung

Die vorliegende Erfindung betrifft eine Ballenwickeleinrichtung, zur Umhüllung eines vorzugsweise rundzylindrischen Ballens mit einem Hüllmaterial, mit einem Rahmen und wenigstens einem an dem Rahmen verschwenkbar angebrachten Wickelarm, wobei der Wickelarm einen zu umwickelnden Ballen zumindest bereichsweise umlaufen kann, mit einer Notstoppeinrichtung, die wenigstens einem Schaltarm umfasst, wobei der wenigstens eine Schaltarm zumindest dem wenigstens einen Wickelarm der Ballenwickeleinrichtung voreilend zugeordnet ist und der bei Kontakt mit einem Hindernis wenigstens eine Funktion der Ballenwickeleinrichtung, insbesondere einen Antrieb des Wickelarms, aktivieren oder deaktivieren kann. Ferner betrifft die Erfindung ein Erntebergungsgerät mit einer Ballenwickeleinrichtung.

Bekannte Notstoppeinrichtungen für Ballenwickeleinrichtungen weisen sogenannte Schaltarme auf, die üblicherweise Wickelarmen der Ballenwickeleinrichtungen in der Art vorauseilen, dass sie einen Antrieb der Wickelarme unterbrechen bzw. die Wickelarme stoppen, wenn zumindest einer der vorauseilenden Schaltarme auf ein Hindernis trifft. Bei dem Hindernis kann es sich um eine Person oder ein Tier handeln, die/das durch ein möglichst sofortiges Abstoppen der Wickelarme vor möglichen Verletzungen geschützt werden soll. Trifft der Schaltarm auf ein Objekt so kann ein Abstoppen der Wickelarme einer Beschädigung der Wickelarme bzw. der Ballenwickeleinrichtung vorbeugen. Derartige Notstoppeinrichtungen bzw. Ballenwickeleinrichtungen können an Erntebergungsgeräten eingesetzt werden, bei denen es sich häufig um Pressen handelt, welche sowohl im landwirtschaftlichen als auch im industriellen Bereich eingesetzt werden. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Nach der Bildung eines Ballens wird dieser in ein Folien- oder Netzmaterial eingehüllt, wozu eine sogenannte Ballenwickeleinrichtung zum Einsatz kommt, welche an das Erntebergungsgerät angeschlossen werden oder auch einen integralen, festen oder lösbaren Bestandteil des Erntebergungsgeräts, einer Presse oder einer Presse-/Wickelkombination, insbesondere in der Art einer sogenannten Kombipresse, bilden kann.

Bekannte Notstoppeinrichtungen für Wickeleinrichtungen sind an die Laufbahn des Hüllmittels angepasst und vorzugsweise derart angeordnet, dass sie den Wickelvorgang möglichst nicht behindern und ein ungehindertes Abtrennen des Hüllmittels am Ende des Wickelvorgangs ermöglichen.

So offenbart die EP 2 106 688 A1 beispielsweise eine Ballenpresse mit einer Balleneinwickelvorrichtung, wobei die Ballenwickelvorrichtung mindestens einen Arm umfasst, der eine Folienabgabevorrichtung hält und wobei der Arm über eine Antriebsanordnung in Rotation um einen mit einer Folie zu umwickelnden Ballen gebracht wird. In Drehrichtung vor dem Arm ist eine Erfassungseinrichtung angeordnet, um die Drehung des Arms anzuhalten, wenn die Erfassungseinrichtung ein Hindernis erfasst.

Insbesondere bei höheren Wickelgeschwindigkeiten kann zur Sicherstellung eines rechtzeitigen Abstoppens der Wickelarme eine Position des Schaltarms erforderlich sein, die ein Abtrennen des Hüllmittels und/oder ein Auswerfen des umhüllten Ballens behindert und gegebenenfalls ein Zurücksetzen der Ballenwickeleinrichtung bzw. eines die Ballenwickeleinrichtung tragenden Erntebergungsgeräts erforderlich macht.

Die der Erfindung zugrunde liegende Aufgabe wird darin gesehen, eine Ballenwickeleinrichtung und/oder ein Erntebergungsgerät der eingangs genannten Art anzugeben, durch welche die vorgenannten Nachteile überwunden werden.

Die Aufgabe wird erfindungsgemäß durch die Lehre der Patentansprüche 1 und 8 gelöst. Weitere vorteilhafte Ausgestaltungen und Weiterbildungen der Erfindung gehen aus den Unteransprüchen hervor.

Eine Ballenwickeleinrichtung weist wenigstens einen Schaltarm auf, der zumindest einem Wickelarm der Ballenwickeleinrichtung voreilend zuordenbar vorgesehen ist. Bei Kontakt des Schaltarms mit einem Hindernis kann die Notstoppeinrichtung wenigstens eine Funktion der Ballenwickeleinrichtung, insbesondere einen Antrieb des Wickelarms, aktivieren und/oder deaktivieren. Ist die Position des Schaltarms bezogen auf den Wickelarm variabel ausgestaltet bzw. variabel einstellbar, so kann diese Position und damit die Stellung in der mittels des Schaltarms die wenigstens eine Funktion aktivierbar/deaktivierbar ist, an jeweilige Erfordernisse oder Gegebenheiten angepasst werden.

Besonders vorteilhaft ist es, wenn die Position des Schaltarms in Abhängigkeit von einer durch die Ballenwickeleinrichtung vorgegebenen Größe, beispielsweise einer Bewegungsgeschwindigkeit bzw. Rotationsgeschwindigkeit der Wickelarme, einstellbar ist. Auf diese Weise kann die Aktivierung und/oder Deaktivierung insbesondere in Abhängigkeit von beispielsweise der Bewegungsgeschwindigkeit bzw. Rotationsgeschwindigkeit der Wickelarme einstellbar sein. Es ist insbesondere vorteilhaft, wenn die Position derart wählbar ist, dass der Schaltarm dem Wickelarm bei einer höheren Bewegungs- bzw Rotationsgeschwindigkeit des Wickelarms weiter voreilt als bei einer niedrigeren Geschwindigkeit. Es kann aber auch vorgesehen sein, dass die Position unabhängig davon oder zusätzlich dadurch bestimmbar ist, ob sich die Ballenwickeleinrichtung in Betrieb befindet und/oder sich bezogen auf den Untergrund bewegt bzw. sich die Wickelarme in Rotation befinden.

Es kann vorgesehen sein, dass die Position des Schaltarms bezogen auf den Wickelarm insbesondere durch eine Bedienungsperson manuell, beispielsweise vor Arbeitsbeginn einstellbar vorgesehen ist. Die Position kann aber auch bei sich ändernden Anforderungen und/oder während des Betriebs/dem Wickelvorgang durch eine Bedienungsperson verändert bzw. verstellt werden. Die Position kann aber auch automatisch veränderbar, insbesondere einstell- und/oder verstellbar vorgesehen sein.

Die Position kann rein manuell, beispielsweise durch ein Lösen einer Befestigung des Schaltarms, beispielsweise durch ein Lösen einer Schraubverbindung, ein Verändern der Position und einer erneuten Befestigung des Schaltarms, beispielsweise durch ein Festziehen einer Schraubverbindung bestimmt werden. Wird die Position aber mittels einer Kontrolleinrichtung bestimmt, so kann insbesondere eine Bedienungsperson direkt bzw. indirekt Einfluss nehmen, indem sie beispielsweise ein entsprechendes, in einer Kabine eines Zugfahrzeugs oder einer selbstfahrenden Erntebergungsmaschine oder an der Erntebergungsmaschine oder der Wickeleinrichtung vorgesehenes Einstellmittel betätigt. Das Einstellmittel kann elektrisch, hydraulisch, pneumatisch oder auch mechanisch, beispielsweise über ein Zug-Druck-Kabel, wirken. Die Kontrolleinrichtung kann aber auch automatisch, beispielsweise durch eine elektronische Steuer- und/oder Regeleinrichtung, beispielsweise auch durch eine elektronische Steuer- und/oder Regeleinrichtung einer Erntebergungsmaschine oder einer Zugmaschine angesteuert werden. Es ist aber auch eine Ausbildung denkbar, in der die Position des Stellarms rein durch Fliehkraftwirkung oder auch kombiniert mit einer Kontrolleinrichtung bestimmbar ausgebildet ist..

Eine Positionierung kann über einen Aktuator erfolgen, der einenends mit dem Schaltarm direkt oder indirekt wirksam verbindbar ist. Der Aktuator kann beispielsweise hydraulisch, pneumatisch, elektrisch oder auch rein mechanisch bzw. manuell bewegt und in der Art eines Hydraulikzylinders, eines Pneumatikzylinders, eines Elektromotors, beispielsweise einem Stellmotor, einem Spindelantrieb, einem Zug-Druck-Kabel oder in jeder anderen geeigneten Art und Weise ausgebildet sein. Ist der Aktuator anderenends direkt oder indirekt mit dem Wickelarm verbindbar, so kann die Position des Schaltarms in Abhängigkeit von einer Position des Wickelarms bestimmt werden.

Insbesondere in Abhängigkeit von der Art der Anbringung des Schaltarms kann die Position durch einen Abstand und/oder einen Winkel zwischen dem Schaltarm und dem Wickelarm definiert sein bzw. werden.

Der Schaltarm kann unabhängig von dem Wickelarm an der Wickeleinrichtung bzw. der Erntebergungsmaschine vorgesehen sein. Ist er aber an dem Wickelarm anbringbar, so kann er zusammen mit diesem bewegt werden. Vorzugsweise ist der Schaltarm an dem Wickelarm verschwenkbar angebracht bzw. anbringbar. Es ist aber auch denkbar, den Schaltarm an dem Wickelarm verschiebbar oder anderweitig geeignet anzubringen.

Eine beschriebene Notstoppeinrichtung kann an einer Ballenwickeleinrichtung zur Umhüllung eines vorzugsweise rundzylindrischen Ballens mit einem Hüllmaterial, mit einem Rahmen und mit wenigstens einem an dem Rahmen verschwenkbar bzw. rotierbar angebrachten Wickelarm eingesetzt werden, wobei der Wickelarm einen zu umwickelnden Ballen zumindest bereichsweise umlaufen kann. Eine derartige Ballenwickeleinrichtung kann auch zwei oder mehrere Notstoppeinrichtungen und/oder eine Notstoppeinrichtung kann einen oder mehrere Schaltarme aufweisen. Eine Ballenwickeleinrichtung kann einen, zwei oder mehrere Wickelarme aufweisen, welche sich unabhängig voneinander, in Abhängigkeit voneinander und/oder miteinander bzw. gemeinsam bewegen können und/oder bewegt oder angetrieben werden. Es kann vorgesehen sein, dass jedem Wickelarm ein Schaltarm zugeordnet ist. Es kann aber auch ein mehreren Wickelarmen zugeordneter Schaltarm vorgesehen sein. Es ist auch denkbar, dass wenigstens ein einteiliger Wickelarm mit zwei oder mehreren Hüllmaterial tragenden Endbereichen vorgesehen ist, wobei diesem wiederum ein, zwei oder mehrere Schaltarme zugeordnet sein können. Eine Ballenwickeleinrichtung kann an einem Erntebergungsgerät vorgesehen, an einem solchen angebracht, angeschlossenen oder einem solchen nachgeordnet sein, beispielsweise auch durch ein Erntebergungsgerät oder an anderes Zugfahrzeug gezogen werden. Eine Ballenwickeleinrichtung kann aber auch selbstfahrend ausgebildet sein.

Eine beschriebene Ballenwickeleinrichtung kann an einem Erntebergungsgerät vorgesehen sein. Bei derartigen Erntebergungsgeräten handelt es sich häufig um Pressen, welche sowohl im landwirtschaftlichen als auch im industriellen Bereich eingesetzt werden. Entsprechende landwirtschaftliche Pressen dienen beispielsweise zur Bildung von Erntegutballen, beispielsweise in der Art von Rundballen, und erzeugen häufig zumindest im Wesentlichen rundzylindrische Ballen aus Erntegut, beispielsweise in der Art von Stroh, Heu, Häckselgut etc.. Nach der Bildung eines Ballens wird dieser in ein Folien- oder Netzmaterial eingehüllt, wozu eine sogenannte Ballenwickeleinrichtung zum Einsatz kommt, welche an das Erntebergungsgerät angeschlossen werden oder auch einen integralen, festen oder lösbaren Bestandteil des Erntebergungsgeräts, einer Presse oder einer Presse-/Wickelkombination, insbesondere in der Art einer sogenannten Kombipresse bilden kann. Auch ein Einsatz an einer Presse zur Herstellung quaderförmiger Ballen oder anderweitig geformter Ballen ist möglich.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: ein Erntebergungsgerät in schematischer Darstellung mit einer Wickeleinrichtung und einer einen Schaltarm aufweisende Notstoppeinrichtung,
- Fig. 2: einen Wickelarm mit einem Schaltarm in einer vereinfachten, räumlichen Darstellung,
- Fig. 3: eine erste Ausführungsform der einen Schaltarm aufweisenden Notstoppeinrichtung von oben betrachtet,
- Fig. 4: eine weitere Ausführungsform einer Notstoppeinrichtung in einer Darstellung gemäß Fig. 3 und
- Fig. 5: einen Schaltarm einer Notstoppeinrichtung in unterschiedlichen Positionen.

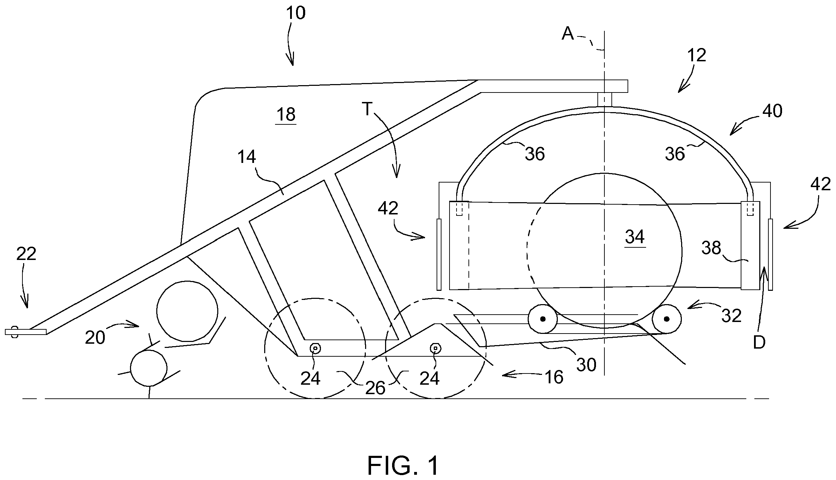

Die Figur 1 zeigt ein Erntebergungsgerät 10 in der Art einer als Rundballenpresse ausgebildeten Presse mit einer nachgeordneten Ballenwickeleinrichtung 12. Das Erntebergungsgerät 10 weist im gezeigten Ausführungsbeispiel einen Rahmen 14, ein Fahrgestell 16, einen Pressraum 18 und eine Zufuhrvorrichtung 20 auf. Weiter ist eine Deichsel 22 vorgesehen, mittels der das Erntebergungsgerät 10 an ein nicht gezeigtes Zugfahrzeug, wie beispielsweise eine landwirtschaftliche Arbeitsmaschine bzw. einen Ackerschlepper anhängbar ist. Das Erntebergungsgerät 10 kann grundsätzlich von jeder herkömmlichen Bauart sein. Gemäß der Figuren handelt es sich bei dem Erntebergungsgerät 10 um eine Rundballenpresse. Eine solche kann beispielsweise einen festen oder variablen Pressraum aufweisen, und sowohl in der Landwirtschaft als auch im industriellen Bereich eingesetzt werden. Vorzugsweise ist die Presse 10 von der Bauart gemäß der deutschen Patentanmeldung 101 53 540.6.

Der Rahmen 14 wird von einem Schweiß- und/oder Schraubzusammenbau gebildet und stützt sich mittels des Fahrgestells 16 auf dem Untergrund ab. Das Fahrgestell 16 ist in der Zeichnung in Tandemachsbauweise mit zwei Achsen 24 dargestellt, von denen jede an jeder Seite mit einem Rad 26 versehen ist. Auch eine Ausgestaltung mit nur einer Achse oder eine Abstützung mittels Raupen oder anderer geeigneter Mittel ist denkbar.

Die Ballenwickeleinrichtung 12 weist einen Rahmen 30, einen Wickeltisch bzw. eine Aufnahmevorrichtung 32, zur Aufnahme des zu umhüllenden Ballens 34, sowie Wickelarme 36, die zur Umhüllung des Ballens 34 mit einem Hüllmaterial 38, beispielsweise einer Folie, mittels eines nicht gezeigten, geeigneten Antriebs um eine Achse A in Bewegung versetzt werden können, sowie eine Notstoppeinrichtung 40 auf.

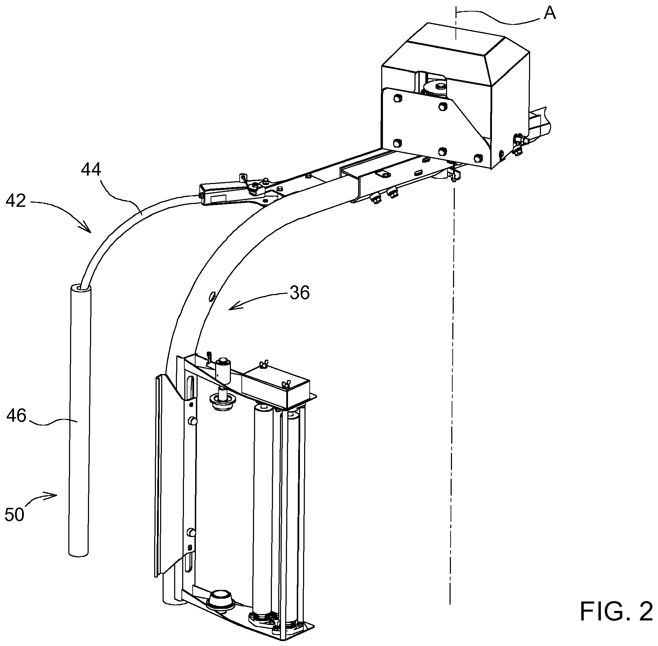

Die Notstoppeinrichtung 40 weist Schaltarme 42 auf, die jeweils den Wickelarmen 36 zugeordnet sind. Untere Endbereiche 44 der Schaltarme 42 erstrecken sich im Wesentlichen parallel zu den Schaltarmen 40. In Figur 2 auf die hiermit ebenfalls Bezug genommen wird, wird ein Wickelam 36 mit dem zugeordneten Schaltarm 42 genauer dargestellt. In den unteren Endbereichen 44 gegenüberliegenden oberen Endbereichen 46 sind die Schaltarme 40 über ein Gelenk 48 derart schwenkbar mit den Wickelarmen 36 verbunden, dass sie im Betrieb den Schaltarmen 40 voreilen. Die unteren Endbereiche 44 sind jeweils mit einem Überzug 50 aus dämpfendem Material, beispielsweise aus Schaumstoff, versehen. Dieser ist aber nicht zwingend erforderlich.

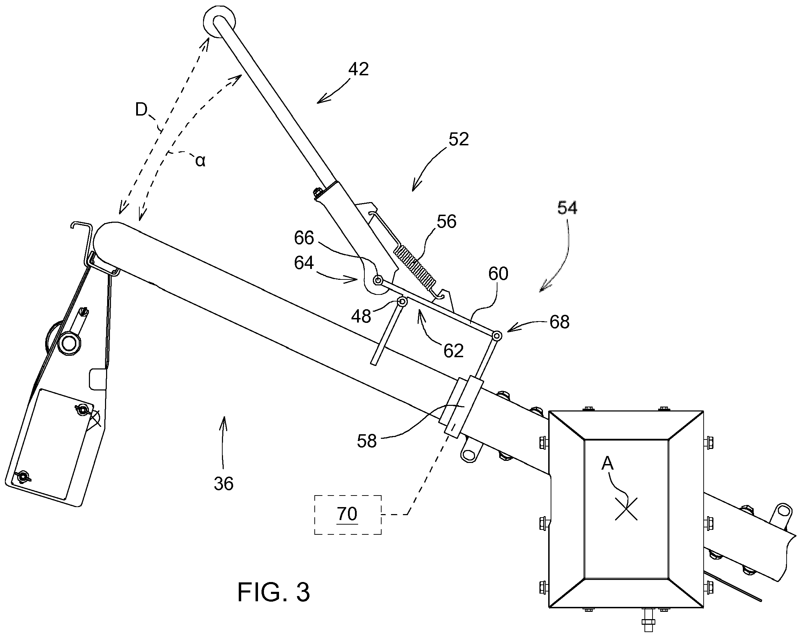

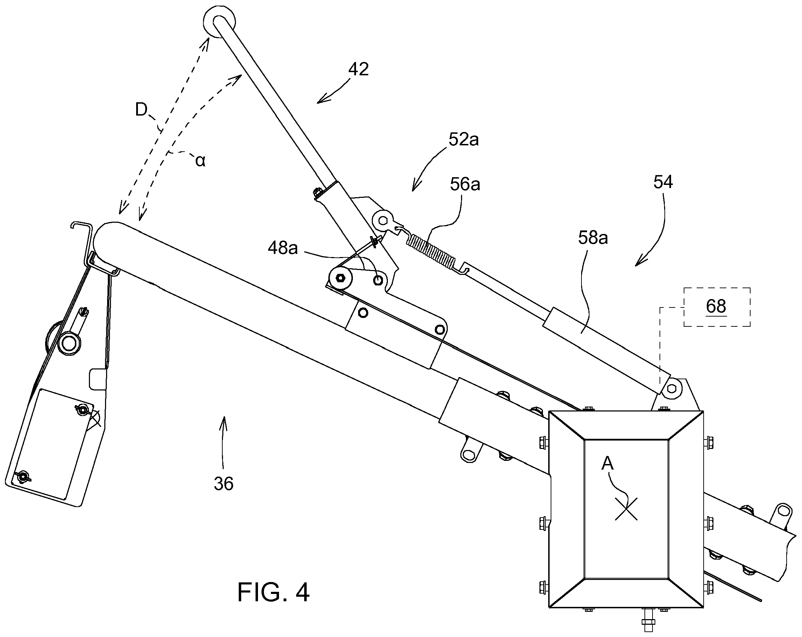

Gemäß der Darstellung in den Figuren 3 und 4 weist die Notstoppeinrichtung 40 eine Schalteinrichtung 52 und eine Stelleinrichtung 54 auf. Die Schalteinrichtung 52 weist ein Spannmittel 56 auf, das einenends an dem Wickelarm 36 und andernends an dem Schaltarm 40 wirkt bzw. angebracht ist. Das Spannmittel 56 ist in der Art einer mechanischen Zugfeder ausgebildet, wobei durchaus andere Ausbildungen von Spannelementen denkbar sind.

Die Notstoppeinrichtung 40 bzw. der Schaltarm 42 wirken in bekannter Weise mit einem nicht gezeigten Schaltmittel, beispielsweise einem einen elektrischen Kreis öffnenden bzw. entsprechend schließenden Schalter, einem mit einer Steuer- oder Regeleinrichtung zusammenwirkenden Sensor oder auch mit geeigneten mechanischen Mitteln, derart zusammen, dass im Falle eines Verschwenkens bzw. Verschwenkt-Werdens des Schaltarms 42 gegen die Wirkung des Spannmittels 56, insbesondere bei einem Auftreffen auf ein Hindernis, ein Notstopp der rotierenden Wickelarme 36 durchgeführt wird. Durch einen Notstopp wird insbesondere der Antrieb der Wickelarme 36 unterbunden, darüber hinaus/alternativ können eine nicht gezeigte Bremseinrichtung für die Wickelarme 36 aktiviert und/oder weitere Funktionen der Wickeleinrichtung 12, eines die Wickeleinrichtung 12 tragenden Erntebergungsgeräts 10 und/oder einer nicht gezeigten Zugmaschine unterbunden und/oder aktiviert/ausgelöst werden.

Die Stelleinrichtung 54 weist einen Aktuator 58 in der Art eines Hydraulikzylinders auf, der derart angetrieben bzw. entsprechend mit Hydraulikflüssigkeit beaufschlagt werden kann, dass ein zwischen dem Wickelarm 36 und dem Schaltarm 42 eingeschlossenen Winkel α und/oder ein Abstand D zwischen dem Wickelarm 36 und dem Schaltarm 42 bzw. dessen unterem Endbereich 44 veränderlich bzw. variabel ist.

Es wird nun wieder auf Figur 3 Bezug genommen, gemäß deren Darstellung ein Schwenkhebel 60 vorgesehen ist, der in einem Mittenbereich 62 mit dem Gelenk 48 schwenkbar verbunden ist. An einem der Achse A abgewandten Bereich 64 der Schwenkplatte 60 ist ein weiteres Gelenk 66 vorgesehen, um das wiederum der Schaltarm 40 mit dem Schwenkhebel 60 schwenkbar verbunden ist. An einem der Achse A zugewandten Bereich 68 der Schwenkplatte 50 greift der Aktuator 58 derart an, dass er den Schwenkhebel 60 und damit auch den an dem Schwenkhebel 60 über das Gelenk 66 verbundenen Schaltarm 40 um das Gelenk 48 verschwenken kann.
Es wird nun auf die Figur 4 Bezug genommen, in der die Bezugszeichen der Figur 3 bei gleicher Ausgestaltung entsprechend übernommen wurden. Den Bezugszeichen wird ein a angefügt, sollte die Ausführung von der in Figur 3 gezeigten Darstellung abweichen. Gemäß der Darstellung in Figur 4 greift ein Aktuator 58a einer Stelleinrichtung 54 einenends an dem Wickelarm 36 an. In der in Figur 4 dargestellten Ausführungsform greift der Aktuator 58a an der Achse A angrenzend und von oben gesehen unterhalb eines Antriebs für die Wickelarme 36 an dem Wickelarm an, Anderenends greift der Aktuator 58a direkt an einem Spannmittel 56a der Schalteinrichtung 52a an. Das ebenfalls als Zugfeder ausgebildete Spannmittel 56a wiederum greift an dem mit dem Wickelarm 36 über ein Gelenk 48a verbundenen Schaltarm 42 an.

Die Stelleinrichtungen 54 gemäß den Figuren 3 und 4 sind jeweils wirksam mit einer Kontrolleinrichtung 70 verbunden. Die Kontrolleinrichtung 70 wirkt derart mit dem Aktuator 58, beispielsweise durch eine entsprechende Beaufschlagung mit Hydrauliköl, zusammen, dass durch sie der zwischen dem unbetätigten Schaltarm 42 und dem Wickelarm 36 eingeschlossener Winkel α bzw. der Abstand D zwischen dem unteren Endbereich 46 des unbetätigten Schaltarms 42 und dem Wickelarm 36 insbesondere in einem unbetätigten Zustand des Schaltarms 42 durch die Kontrolleinrichtung 70 gesteuert und/oder geregelt werden kann. Der Aktuator kann aber auch in der Art einer mechanischen Verbindung, beispielsweise als Hebel- oder Lenkerverbindungen, als ein Zug-Druck-Kabel, ein Spindelantrieb, ein elektrischer Antrieb, beispielsweise in der eines Stellmotors oder in jeder anderen geeigneten Art und Weise ausgebildet sein. Die Ansteuerung bzw. Regelung kann automatisch oder manuell erfolgen.

Allgemein wird im Betrieb ein Ballen 34 von dem Erntebergungsgerät 10 nach Abschluss des Pressvorgangs abgegeben und an die Ballenwickeleinrichtung 12 mittels bekannter, nicht näher dargestellter Mittel übergeben. Nach Aufnahme des Ballens 34 durch die Aufnahmeeinrichtung 32 wird der Ballen 34 mittels der Wickelarme 36 mit Hüllmaterial 38 umhüllt.

Während der Umhüllung des Ballens 34 mit Hüllmaterial 38 eilen die Schaltarme 42 den Wickelarmen 36 voraus. Tritt einer der Schaltarme 42 in Kontakt mit einem Hindernis, beispielsweise mit einer Person oder auch einem Tier, die oder das durch die Wickelarme 42 verletzt werden könnte, oder mit einem Objekt, beispielsweise einem Gegenstand, der zu einer Beschädigung der Ballenwickeleinrichtung 12, des Erntebergungsgeräts 10 oder eines oder mehrerer Bestandteile der Ballenwickeleinrichtung 12 und/oder des Erntebergungsgeräts 10 führen könnte, so verschwenkt der Schaltarm 42 gegen die Wirkung des Spannmittels 56, 56a und deaktiviert wenigstens eine Funktion der Ballenwickeleinrichtung 12 bzw. des Erntebergungsgeräts 10, insbesondere den Antrieb der Wickelarme 42, und aktiviert vorzugsweise eine Bremseinrichtung, um die Wickelarme 36 bzw. deren Rotationsbewegung abzubremsen.

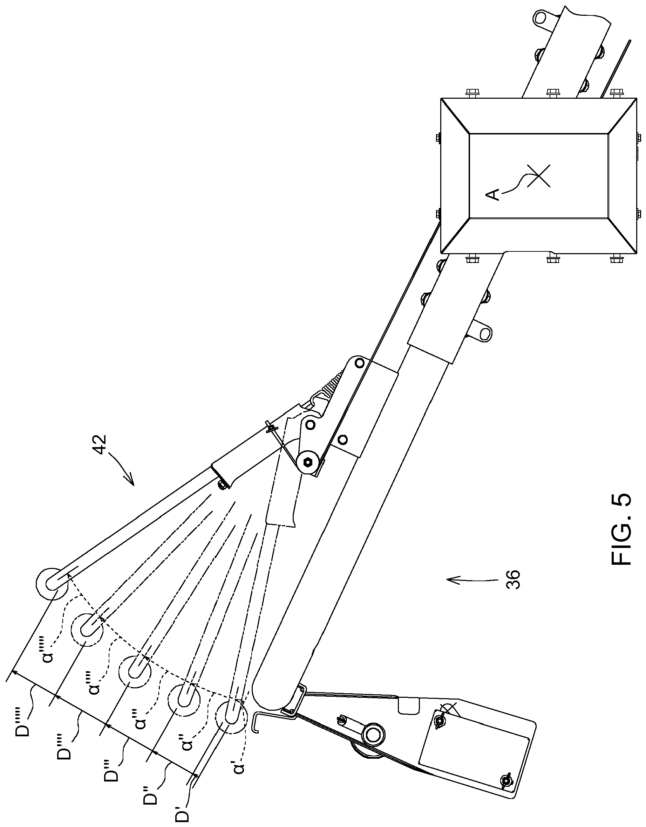

Der Abstand D bzw. der Winkel α sind verstell- bzw. einstellbar vorgesehen, um eine Verzögerung zwischen einem Auftreffen des/der Schaltarme 42 auf ein Hindernis in der Art einer Person, eines Tiers und/oder eines Objekts insbesondere bei unterschiedlichen (Rotations-)Geschwindigkeiten verstellen, einstellen bzw. anpassen zu können. Bewegt sich bzw. rotiert die Wickeleinrichtung 12 bzw. deren Wickelarme 36 mit einer höheren Geschwindigkeit kann der Abstand W bzw. der Winkel α vergrößert bzw. bei einer geringeren Geschwindigkeit verkleinert werden. Hierzu wird nun auf Figur 5 Bezug genommen, in der der Schaltarm in entsprechend unterschiedlichen Stellungen mit unterschiedlich großen Abständen D'; D", D'", D"", D""' bzw. Winkeln α', α", α"', α"", α""' gezeigt werden. Es kann vorgesehen sein, dass der Schaltarm 42 seine jeweilige Position dauerhaft beibehält, es ist aber auch denkbar, dass der Schaltarm 42 eine Ruhestellung einnehmen kann, in der er beispielsweise dicht an den Wickelarm 36 anliegt, wenn die Ballenwickeleinrichtung 12 nicht in Betrieb ist und/oder, wenn der Ballenwickelprozess abgeschlossen, das Hüllmaterial abgetrennt und/oder der Ballen aus der Ballenwickeleinrichtung 12 bzw. aus dem Erntebergungsgerät 10 abgegeben werden soll.

Es ist auch denkbar, dass entsprechend der vereinfachten Darstellung in Figur 5, keine Kontrolleinrichtung vorgesehen ist, in der Art, dass der Schaltarm 42 derart ausgebildet ist, dass er aufgrund der Wirkung einer Fliehkraft eine bezogen auf den Wickelarm 36 vorbestimmte bzw. von der Stärke der auftretenden Fliehkraft bestimmte Position einnimmt. Hierzu kann der Schaltarm 42 beispielsweise mit einem geeigneten Spann- oder Federmittel zusammenwirken, beispielsweise indem er durch das Spann- oder Federmittel gegen die Wirkung der Fliehkraft vorgespannt wird.

## Patentansprüche

1. Ballenwickeleinrichtung (12), zur Umhüllung eines vorzugsweise rundzylindrischen Ballens (34) mit einem Hüllmaterial (38), mit einem Rahmen (14) und wenigstens einem an dem Rahmen (14) verschwenkbar angebrachten Wickelarm (36), wobei der Wickelarm (36) einen zu umwickelnden Ballen (34) zumindest bereichsweise umlaufen kann, mit einer Notstoppeinrichtung (40), die wenigstens einem Schaltarm (42) umfasst, wobei der wenigstens eine Schaltarm (42) zumindest dem wenigstens einen Wickelarm (36) der Ballenwickeleinrichtung (12) voreilend zugeordnet ist und der bei Kontakt mit einem Hindernis wenigstens eine Funktion der Ballenwickeleinrichtung (12), insbesondere einen Antrieb des Wickelarms (36), aktivieren oder deaktivieren kann, **dadurch gekennzeichnet, dass** eine Position des Schaltarms (42) bezogen auf den Wickelarm (36) variabel einstellbar ist, wobei die Position eine Stellung bezeichnet in der mittels des Schaltarms (42) die wenigstens eine Funktion aktivierbar oder deaktivierbar ist.

2. Ballenwickeleinrichtung (12) nach Anspruch 1, **dadurch gekennzeichnet, dass** die Position des Schaltarms (42) in Abhängigkeit von einer durch die Ballenwickeleinrichtung (12) bestimmten Größe, insbesondere durch eine Bewegungsgeschwindigkeit bzw. Rotationsgeschwindigkeit des Wickelarms (36), einstellbar ist.

3. Ballenwickeleinrichtung (12) nach Anspruch 1 oder 2, **dadurch gekennzeichnet, dass** die Position manuell und/oder automatisch veränderbar, insbesondere einstell- und/oder verstellbar vorgesehen ist.

4. Ballenwickeleinrichtung (12) nach Anspruch 3, **dadurch gekennzeichnet, dass** die Position mittels einer Kontrolleinrichtung (70) und/oder durch Fliehkraftwirkung eingestellt und/oder verstellt wird.

5. Ballenwickeleinrichtung (12) nach einem der vorherigen Ansprüche, **dadurch gekennzeichnet, dass** mit dem Schaltarm (42) ein Aktuator (58, 58a) einenends direkt oder indirekt wirksam verbindbar ist, der andernends direkt oder indirekt mit dem Wickelarm (36) verbindbar ist.

6. Ballenwickeleinrichtung (12) nach einem der vorherigen Ansprüche, **dadurch gekennzeichnet, dass** die Position durch einen Abstand (D) und/oder einen Winkel (α) zwischen dem Schaltarm (42) und dem Wickelarm (36) definierbar ist.

7. Ballenwickeleinrichtung (12) nach einem der vorherigen Ansprüche, **dadurch gekennzeichnet, dass** der Schaltarm (42) an dem Wickelarm (36) insbesondere verschwenkbar anbringbar ist.

8. Erntebergungsgerät (10) mit einer Ballenwickeleinrichtung (12) nach einem der vorangehenden Ansprüche 1 bis 7.

## Claims

1. Bale wrapper (12) for enveloping a preferably round-cylindrical bale (34) with an enveloping material (38), having a frame (14) and at least one wrapping arm (36), which is fitted in a pivotable manner on the frame (14), wherein the wrapping arm (36) can at least partially pass around a bale (34) which is to be wrapped, and having an emergency-stop device (40), which comprises at least one switching arm (42), wherein the at least one switching arm (42) is provided so as to be ahead at least of the at least one wrapping arm (36) of the bale wrapper (12) and, upon contact with an obstacle, can activate or deactivate at least one function of the bale wrapper (12), in particular a drive of the wrapping arm (36), **characterized in that** a position of the switching arm (42) in relation to the wrapping arm (36) can be set in a variable manner, wherein the position denotes a setting in which the at least one function can be activated or deactivated by means of the switching arm (42).

2. Bale wrapper (12) according to Claim 1, **characterized in that** the position of the switching arm (42) can be set in dependence on a variable determined by the bale wrapper (12), in particular a movement speed or rotational speed of the wrapping arm (36).

3. Bale wrapper (12) according to Claim 1 or 2, **characterized in that** the position can be altered, in particular set and/or adjusted, manually and/or automatically.

4. Bale wrapper (12) according to Claim 3, **characterized in that** the position is set and/or adjusted by means of a control device (70) and/or by the action of centrifugal force.

5. Bale wrapper (12) according to one of the preceding claims, **characterized in that** an actuator (58, 58a) can have one end connected in an effective manner directly or indirectly to the switching arm (42) and can have its other end connected directly or indirectly to the wrapping arm (36).

6. Bale wrapper (12) according to one of the preceding claims, **characterized in that** the position can be defined by a distance (D) and/or an angle (α) between the switching arm (42) and the wrapping arm (36).

7. Bale wrapper (12) according to one of the preceding claims, **characterized in that** the switching arm (42) can be fitted, in particular in a pivotable manner, on the wrapping arm (36).

8. Harvesting machine (10) having a bale wrapper (12) according to one of preceding Claims 1 to 7.

## Revendications

1. Enrubanneuse (12) pour envelopper une balle de préférence cylindrique ronde (34) avec un matériau d'enveloppe (38), avec un châssis (14) et au moins un bras d'enroulement (36) monté de façon pivotante sur le châssis (14), dans laquelle le bras d'enroulement (36) peut contourner au moins localement une balle à enrouler (34), avec un dispositif d'arrêt d'urgence (40), qui comprend au moins un bras de commutation (42), dans laquelle l'au moins un bras de commutation (42) est associé en avant à au moins l'au moins un bras d'enroulement (36) de l'enrubanneuse (12) et il peut par contact avec un obstacle activer ou désactiver une fonction de l'enrubanneuse (12), en particulier un entraînement du bras d'enroulement (36), **caractérisée en ce qu'**une position du bras de commutation (42) par rapport au bras d'enroulement (36) est réglable de façon variable, dans laquelle la position désigne une position dans laquelle l'au moins une fonction peut être activée ou désactivée au moyen du bras de commutation (42).

2. Enrubanneuse (12) selon la revendication 1, **caractérisée en ce que** la position du bras de commutation (42) peut être réglée en fonction d'une grandeur déterminée par l'enrubanneuse (12), en particulier par une vitesse de mouvement ou une vitesse de rotation du bras d'enroulement (36).

3. Enrubanneuse (12) selon une revendication 1 ou 2, **caractérisée en ce que** la position est prévue sous forme modifiable manuellement et/ou automatiquement, en particulier sous forme réglable ou déplaçable.

4. Enrubanneuse (12) selon la revendication 3, **caractérisée en ce que** la position est réglée et/ou déplacée au moyen d'un dispositif de contrôle (70) et/ou par l'action de la force centrifuge.

5. Enrubanneuse (12) selon l'une quelconque des revendications précédentes, **caractérisée en ce qu'**un actionneur (58, 58a) peut être relié par une extrémité de façon active directement ou indirectement au bras de commutation (42), et peut être relié par l'autre extrémité directement ou indirectement au bras d'enroulement (36).

6. Enrubanneuse (12) selon l'une quelconque des revendications précédentes, **caractérisée en ce que** la position peut être définie par une distance (D) et/ou un angle (α) entre le bras de commutation (42) et le bras d'enroulement (36).

7. Enrubanneuse (12) selon l'une quelconque des revendications précédentes, **caractérisée en ce que** le bras de commutation (42) peut être monté, en particulier de façon pivotante, sur le bras d'enroulement (36).

8. Appareil de récupération de récolte (10) avec une enrubanneuse (12) selon l'une quelconque des revendications précédentes 1 à 7.
